# EUROPÄISCHE PATENTANMELDUNG

(11) **EP 0 536 681 A1**
(43) Veröffentlichungstag der Anmeldung: **14.04.1993**
(21) Anmeldenummer: 92117006.4
(22) Anmeldetag: 06.10.1992
(51) Int. Cl.: B32B 27/34, C08G 69/36, B65D 65/40

(54) **Sperrschicht aus Copolyamid, ihre Verwendung sowie diese Sperrschicht enthaltende Mehrweg-Mehrschicht-Verpackungskörper**

(30) Priorität: 06.12.1991 DE 4140350; 11.10.1991 DE 4133781
(71) Anmelder: EMS-INVENTA AG, CH-8001 Zürich (CH)
(72) Erfinder: Dalla Torre, Hans, Dr. phil., CH-7013 Domat/Ems (CH); Hewel, Manfred, Dr. rer. nat., CH-7415 Rodels (CH)
(74) Vertreter: Müller-Boré & Partner Patentanwälte

(57) **Zusammenfassung**

Es werden Sperrschichten aus Copolyamid, insbesondere für Mehrschicht-Verpackungen zur Verfügung gestellt, wobei die Sperrschicht heisswasserbeständig-transparent ist und das Copolyamid ein teilaromatisches, amorphes Copolyamid aus folgenden Bestandteilen besteht:
(a) 50 Mol-Teile unsubstituierte oder substituierte aromatische Dicarbonsäuren, welche von O bis zu 60 Gew.-%, insbesondere 2 bis 50 Gew.-%, durch mindestens eine weitere Dicarbonsäure, ausgewählt aus der Gruppe der
   - cycloaliphatischen Dicarbonsäuren mit 8 bis 24 C-Atomen,
   - araliphatischen Dicarbonsäuren mit 8 bos 18 C-Atomen
   ersetzt sind
(b) 50 Mol-Teile Hexamethylendiamin, welches bis zu 60 Gew.-%, insbesondere 5 bis 50 Gew.-%, durch mindestens ein weiteres Diamin, ausgewählt aus der Gruppe der
   - unsubstituierten oder substituierten aliphatischen Diamine mit 4 bis 20 C-Atomen,
   - substituierten cycloaliphatischen Diamine mit 6 bis 24 C-Atomen,
   - araliphatischen Diamine mit 8 bis 18 C-Atomen
   ersetzt ist,
wobei die Säurengruppen und die Aminogruppen im wesentlichen in äquimolaren Anteilen vorliegen.

Diese Sperrschichten werden zur Herstellung von Mehrweg-Mehrschicht-Verpackungskörpern verwendet, die dann mindestens eine derartige Sperrschicht aus einem teilkristallinen, amorphen Copolyamid gegebenenfalls zusätzlich zu weiteren Polymerschichten enthalten.

## Beschreibung

Die Erfindung betrifft den in den Patentansprüchen angegebenen Gegenstand. Insbesondere betrifft die Erfindung dauerhaft heisswasserbeständig-transparente Sperrschichten aus Copolyamid für Mehrweg-Mehrschicht-Verpackungskörper, die Verwendung dieser Sperrschicht zur Herstellung von Mehrweg-Mehrschicht-Verpackungskörper sowie flexibel oder steife Mehrweg-Mehrschicht-Verpackungskörper, die mindestens eine Sperrschicht aus derartigen heisswasserbeständig-transparenten Copolyamiden aufweisen.

In der Verpackungs- und Nahrungsmittel- sowie pharmazeutischen Industrie besteht ein ansteigender Bedarf für geeignete Kunststoffmaterialien zum Ersatz von Glas- und Metallverpackungen, insbesondere bei Nahrungsmitteln, Getränken und pharmazeutischen Produkten. Die in diesen Bereichen angewendeten Mehrschicht-Verpackungssysteme enthalten in der Regel mehrere Schichten aus verschiedenen Polymeren wie Polyethylen, Polypropylen, Polyvinylchlorid und -fluorid, Polyvinylalkohol, Polyethylenvinylalkohol, Polyamide, Ionomere, Polyester, Polycarbonate, Polyacrylate und andere Polymere, deren Blends oder deren Mischungen.

Diese Verpackungssysteme stellen im allgemeinen Schutz-, Sperr- und Stützsysteme für die obengenannten Nahrungsmittel, Getränke sowie medizinischen, chemischen, biologischen und pharmazeutischen Produkte dar. Sie umfassen im weitesten Sinne Verpackungsarten wie Schläuche, Rohre, Flaschen, Container, Säcke, Kannen und ähnliche Behälter.

Jedoch müssen für die obengenannten Anwendungsgebiete die Kunststoffmaterialien zusätzlich zu einer guten Verarbeitbarkeit und guten mechanischen Eigenschaften eine Barriereschicht aufweisen, die gegenüber Sauerstoff, Kohlendioxid, Wasserdampf und weiteren Gasen und Gasgemischen, wie Aroma- und Duftstoffen oder toxischen und nichttoxischen Gasen oder Kohlenwasserstoffen möglichst undurchlässig bzw. resistent ist. Sehr oft sind Materialien, die gute Sperrschicht-Eigenschaften gegenüber Sauerstoff aufweisen, wasserdampfdurchlässig. So stellen polare Polymere, die Hydroxylgruppen enthalten, wie Cellophan und Polyvinylalkohol gute Sperrschichten gegenüber Sauerstoff dar, sie sind aber extrem hygroskopisch und verlieren ihre Sperrschichteigenschaften in einem signifikanten Ausmass, wenn sie feucht sind. Hydrophobe Polymere wie Polyolefine stellen eine gute Barriere gegenüber Wasserdampf dar, ihre Gebrauchsqualität gegen Sauerstoff ist jedoch schlecht. Polymere, die ein ausgewogenes Verhältnis von hydrophoben und hydrophilen Strukturen aufweisen wie beispielsweise Polyvinylalkohole, Ethylenvinylalkoholcopolymere und Nylon (Nylon 6 und 6,6) weisen sehr gute Sperrschicht-Eigenschaften in Umgebungen auf, die einen niedrigen Wasserdampfdruck aufweisen, aber sobald dieser ansteigt, wird beispielsweise eine Nylon-Sperrschicht sauerstoffdurchlässig, was auf die plastifizierende Wirkung von absorbierten Wasser zurückzuführen ist.

Aus der US-PS 4,826,955 sind Barriereschichten aus einem amorphen Nyloncopolymer bekannt. Dieses Copolyamid ist aus einem Lactam, aus m-Xylilendiamin und Terephthalsäure oder Isophthalsäure aufgebaut. Nachteilig bei diesen Copolyamiden ist, dass der Glasumwandlungspunkt (TG) in feuchtem Zustand auf sehr niedrige Werte von ca. 50°C absinkt, wodurch z.B. eine Reinigung eines Behälters mit heissem Wasser von über 70°C zwecks Wiederverwendung des Behälters nicht möglich ist.

Aus der US-PS 4,696,865 sind Copolyamide aus Hexamethylenterephthalamid (6.T) und Hexamethylenisophthalamid (6.I) zum Einsatz für Verpackungsbehälter wie Flaschen bekannt, wobei diese Copolyamidschichten sehr gute Barriere-Eigenschaften gegenüber Sauerstoff und Kohlendioxid aufweisen. Das Gewichtsverhältnis von Terephthalsäure zu Isophthalsäure in obigem Copolyamid liegt zwischen 1,0 und 1,9, insbesondere zwischen 1 und 1,5. Die Copolyamide gemäss der US-PS 4,696,865 weisen eine Glasumwandlungstemperatur (TG) von ca. 135-165°C auf, die jedoch in konditioniertem Zustand unter 100°C absinkt, wodurch wiederholte Reinigungsvorgänge mit heissem Wasser, das eine Temperatur von über 60°C aufweist, nicht durchgeführt werden können, so dass eine Wiederverwendung derartiger Behälter nicht vorgesehen bzw. sehr beschränkt ist.

Aus hygienischen Gründen muss die Reinigung von Flaschen für zucker- und farbstoffhaltige Getränke bei mindestens 70°C erfolgen können.

Da solche Copolyamide oft schon von ihrer Herstellung her leicht trüb sind, bleiben sie für viele Verpackungsarten unberücksichtigt.

Aus der EP-A-0358038 sind Nylonblends, sowie Einzel- und Mehrschichtenfilme und -behälter bekannt, die Nylonblends enthalten. Diese Schichten bestehen aus einer Legierung aus amorphen Copolymeren des Hexamethylen-isophthalamid-/terephthalamids und einem kristallinen Copolyamid, das einen Schmelzpunkt von mindestens etwa 145°C aufweist. In dieser Polymerkombination sinkt einerseits der Erweichungspunkt des amorphen Copolyamids durch den Legierungseffekt mit dem teilkristallinen Copolyamid. Anderseits besitzt das Blend in konditioniertem Zustand eine viel niedrigere Festigkeit und Wärmeformbe-ständigkeit als in trockenem Zustand. Solche Legierungen werden nach wiederholtem Heisswasserkontakt ebenfalls trüb und spröde.

Aus der US-PS 4,937,130 sind Mehrschicht Polycarbonatbehälter bekannt, die zwischen der inneren aromatischen Polycarbonat- und der äusseren aromatischen Polycarbonatschicht und weiteren Haftschichten aus Polycarbonat /Polyamid-Blends eine Zwischenschicht aus einem ähnlichen amorphem Polyamid enthalten, das aus Hexamethylendiamin, Isophthalsäure, Terephthalsäure und wahlweise 1,4-Bisaminomethylcylohexan besteht und eine Glasübergangstemperatur im trockenen Zustand von etwa 105°C hat. Bei wiederholtem Kontakt mit heissem Wasser jedoch wird auch dieses Copolyamid trüb und bruchanfällig, während der T_{G} auf Werte unter 60°C fällt. Die Wiederverwendbarkeit für gesüsste Getränke und Fruchtsäfte ist nicht gegeben.

Aus der EP-A-0409666 sind Polyamidzusammensetzungen mit verbesserten Gas-Sperrschichteigenschaften bekannt. Diese Polyamide bestehen aus Hexamethylen- und meta-Xylilenisophthalamid, Adipinsäure- und gegebenenfalls Terephthalsäureeinheiten. Die Glasumwandlungstemperatur dieses Copolyamids liegt nur bei etwa 90°C. Eine mehrfache Reinigung eines Behälters, der eine derartige Polyamid-Sperrschicht aufweist, mit heissem Wasser mit einer Temperatur von über 70°C zwecks Wiederverwendung des Behälters ist somit nicht möglich.

Die in den verschiedenen Patentschriften erwähnten lactamhaltigen Copolyamide besitzen weiterhin den Nachteil, dass Monomere aus der Copolyamidschicht migrieren, was bei Verpackungen im Lebensmittelbereich unzulässig ist, bzw. aus toxikologischer Sicht bedenklich ist. Copolyamide, welche Lactam-Bausteine haben, nehmen zudem grössere Mengen an Feuchtigkeit auf, wodurch ebenfalls die Qualität der Schicht beeinträchtigt wird.

Es besteht aber im Verpackungssektor, z.B. bei Behältern für kohlensäurehaltige und süsse Getränke ein grosser Bedarf an Copolyamiden mit hochwertigen und ausgewogenen Barriere- und mechanischen Eigenschaften, welche u.a. eine wiederholte sterilisierende Reinigung mit Heisswasser von 70°C und höher schadlos überstehen, so dass weder Transparenz noch Festigkeit noch Flexibilität noch deren Barriere-Qualitäten abnehmen.

Während Flaschen für Mineralwasser (Tafelwasser) aus Polyethylenterephthalat bei 50-60°C gewaschen werden und nur beschränkt wiederverwendbar sind, liegen in der Praxis die Reinigungsanforderungen für Behälter für stark gefärbte und gesüsste Getränke (bei 15-20 Reinigungszyklen) bei 80°C und höher während einer Reinigungszyklusdauer von 10-20 min.

Es ist daher Aufgabe der Erfindung, eine Sperrschicht aus Copolyamid, die für Mehrschichtverpackungen bzw. Mehrweg-Mehrschicht-Verpackungskörper eingesetzt werden soll, bereitzustellen, welche einerseits gute Sperrschicht-Eigenschaften gegenüber Sauerstoff, Kohlensäure, Wasserdampf und weiteren Gasen und Gasgemischen wie Aroma- und Duftstoffen und nichttoxische Gasen oder Kohlenwasserstoffe aufweist und ausserdem eine hohe Wärmeformbeständigkeit, hohe Festigkeit und Duktilität, trocken wie konditioniert hat, in Flexibilität bzw. Steifigkeit über seine Zusammensetzung einstellbar ist und andererseits gegen heisses Wasser mit einer Temperatur im Bereich von mindestens 70°C so weit beständig ist, dass sie nicht trüb oder spröde wird. Weiterhin soll ein Mehrweg-Mehrschicht-Verpackungskörper zur Verfügung gestellt werden, der eine derartige Sperrschicht aufweist.

Diese Aufgabe wird durch die Sperrschicht mit den kennzeichnenden Merkmalen des Anspruchs 1, ihre Verwendung gemäss Anspruch 10 und durch die Mehrweg-Mehrschicht-Verpackungskörper nach Anspruch 11 gelöst.

Die Copolyamide der erfindungsgemässen Sperrschicht zeigen überraschenderweise einen sehr ähnlichen Brechungsindex wie z.B. Polycarbonat, sodass die Transparenz bei Kombination mit diesem Polymere nicht beeinträchtigt wird. Ausserdem kann der Brechungsindex des erfindungsgemässen Copolyamids innerhalb weiter Grenzen eingestellt werden. Ueberraschenderweise wurde weiterhin festgestellt, dass die Transparenz der erfindungsgemässen Copolyamide gegen Heisswasser mit einer Temperatur von 70-95°C beständig sind, wodurch eine Wiederverwendung gebrauchter Getränkeflaschen ermöglicht wird, die beispielsweise 15-20 Reinigungszyklen bei 80°C während einer Zeitdauer des Zyklus von 10-20 min. überstehen.

Die erfindungsgemässe Sperrschicht aus Copolyamid ist dauerhaft heisswasserbeständig-transparent und das Copolyamid ist ein teilaromatisches, amorphes Copolyamid aus den folgenden Bestandteilen:
(a) 50 Mol-Teile unsubstituierte oder substituierte aromatische Dicarbonsäuren, welche von O bis 6O Gew.-% durch mindestens eine weitere Dicarbonsäure, ausgewählt aus der Gruppe der
   - cycloaliphatischen Dicarbonsäuren mit 8 bis 24 C-Atomen,
   - araliphatischen Dicarbonsäuren mit 8 bis 18 C-Atomen
   ersetzt sind und
(b) 50 Mol-Teile Hexamthylendiamin, welches bis zu 6O Gew.-% durch mindestens ein weiteres Diamin, ausgewählt aus der Gruppe der
   - substituierten oder unsubstituierten aliphatischen Diamine mit 4 bis 20 C-Atomen,
   - substituierten cycloaliphatischen Diamine mit 6 bis 24 C-Atomen,
   - araliphatischen Diamine mit 8 bis 18 C-Atomen, ersetzt sind,
   wobei die Säurengruppen und Aminogruppen im wesentlichen in äquimolaren Anteilen vorliegen.

Der Fachmann weiss jedoch, dass die Bestandteile (a) und (b) nicht exakt jeweils 50 Mol-Teile betragen und innerhalb gewisser Grenzen schwanken können, je nachdem, ob man carboxyl- oder aminogruppenterminierte Copolyamide haben will.

In einer besonderen Ausführungsform besteht die erfindungsgemässe Sperrschicht aus amorphem Copolyamid im wesentlichen aus aromatischen Dicarbonsäuren wie Isophthalsäure und/oder Terephthalsäure und/oder tert. Butylisophthalsäure, welche von O bis zu 60 Gew.-%, insbesondere von 5 bis 50 Gew.-%, durch weitere cycloaliphatische oder araliphatische Dicarbonsäuren ersetzt sein können, sowie aus Hexamethylendiamin, das bis zu 60 Gew.-%, insbesondere 5 bis 50 Gew.-% durch mindestens ein weiteres substituiertes oder nichtsubstituiertes aliphatisches, substituiertes cycloaliphatisches oder araliphatisches Diamin ersetzt ist.

Die erfindungsgemässen Copolyamide werden vorzugsweise hergestellt aus:
a) unsubstituierten und/oder substituierten aromatischen Dicarbonsäuren, Isophthalsäure, Terephthalsäure oder t-Butylisophthalsäure, welche noch weitere cycloaliphatische oder araliphatische Dicarbonsäuren enthalten können. Beispiele solcher Dicarbonsäure sind: Cyclohexandicarbonsäuren, Xylilendicarbonsäuren, Diphenylpropandicarbonsäuren, ferner
b) aus Hexamthylendiamin und mindestens einem weiteren substituierten oder unsubstituierten Diamin aus der Reihe der aliphatischen, cycloaliphatischen oder araliphatischen Diamine. Beispiele solcher Diamine sind Trimethylhexamethylendiamine, wie 2,2',4-und 2,4,4'-Trimethylhexamethylendiamin, 3,3'Dimethyl-4,4'diamino-dicyclohexyl-methan (Laromin), Bis-(4-amino-3,5-diethylcyclohexyl)-methan, m-Xylilendiamin, p-Xylilendiamin, 1,3-Diaminomethyl-cyclohexan, 3-Aminomethyl-3,5,5-trimethyl-1-cyclo-hexyl-amin (Isophorondiamin) und ähnliche Diamine.

Insbesondere ist das Copolymer aus Einheiten von Terephthalsäure, Isophthalsäure sowie Hexamethylendiamin und 3,3'-Dimethyl-4,4'-diaminodicyclohexyl-methan oder aus Einheiten von Terephthalsäure, Isophthalsäure sowie Hexamethylendiamin und m-Xylilendiamin aufgebaut. Das erfindungsgemässe Copolyamid hat in trockenem Zustand eine Glasumwandlungstemperatur (TG) von mindestens 135°C, insbesondere von mindestens 140°C, die im konditionierten Zustand nicht unter 75°C, bevorzugt nicht unter 80°C absinkt.

Mehrschichtverpackungssysteme enthalten in der Regel mehrere Schichten, die aus verschiedenen Polymeren bestehen, wie Polyethylen, Polypropylen, Polyvinylchlorid und -fluorid, Polyvinylalkohol, Polyethylenvinylalkohol, Polyamide, Ionomere, Polyester, Polycarbonate, Polyacrylate und andere Polymere, deren Blends oder deren Mischungen.

In den erfindungsgemässen Mehrschicht-Verpackungssystemen kann mindestens eine Schicht durch die erfindungsgemässen Copolyamide gebildet werden, welche selbst lose, von anderen Schichten getrennt sein können oder mit einem anderen der obengenannten Polymeren ein Co-Extrudat, eine Verbindung oder ein Gemisch bilden und z.B. durch Coextrusion, Tiefziehen, Blasformen oder einer vergleichbaren Technik hergestellt sein können.

Der Bedarf an geeigneten Verpackungsmaterialien, welche ausgewogenen Barriere-Eigenschaften, neben guter Festigkeit und Wärmeformbeständigkeit, guter Waschbeständigkeit, hoher Transparenz und Eignung zur Wiederverwendung aufweisen, ist ausserordentlich gross. Von besonderem Interesse sind Mehrwegverpackungen für intensiv gefärbte, kohlensäurehaltige Produkte, die zur Reinigung heisswasserbeständig sind. Alle diese genannten Forderungen werden durch Verpackungsmaterialien erfüllt, die die erfindungsgemässe Sperrschicht aus den teilaromatischen, amorphen Copolyamiden enthalten.

Der erfindungsgemässe Mehrweg-Mehrschicht-Verpackungskörper mit mindestens einer Sperrschicht wird in an sich bekannter Weise bevorzugt durch Extrusion, Koextrusion, Blasformen, Tiefziehen, hergestellt.

Von Vorteil ist, dass die erfindungsgemässen amorphen transparenten Sperrschicht-Copolyamide einen Brechungsindex aufweisen, der sich an die nächstanschliessende polymere Schicht anpassen lässt, so dass keine Beeinträchtigung der Transparenz des Mehrschicht-Systems erfolgt.

Die erfindungsgemässen Sperrschicht-Copolyamide werden durch die folgenden Beispiele näher erläutert.

### Beispiel 1

Ein 150 l Druckautoklav, der mit Rührer, Thermofühler, Stickstoffbegasung, Oelumlaufheizung ausgerüstet ist, wird mit Monomeren in der folgenden Zusammensetzung beschickt: 40 Mol-% Hexamethylendiamin, 10 Mol-% 3,3'Dimethyl-4,4'diaminodicyclohexyl-methan (Laromin C 260), 40 Mol-% Isophthalsäure (IPA) und 10 Mol-% Tereph-thalsäure (TPA). Nach Zugabe einer Menge Wasser , die 35 Gew.-% der Einsatzmenge an Feststoffen entspricht, und einem Stabilisator (Essigsäure, 0,4 Gew.-% der Einsatzmenge der Feststoffe) wird die Charge nach wiederholter Stickstoffspülung auf 270-290°C erhitzt. Nach Ablassen des Druckes wird die Schmelze entgast und mittels einer Spinnpumpe als Strang abgezogen. Zur Kühlung desselben wird dieser durch ein Wasserbad gezogen und mittels einer Schneidvorrichtung granuliert. Man erhält ca. 30 kg eines transparenten Copolyamids. Nach der Trocknung unter Stickstoff bei 110°C besitzt es folgende physikalische Eigenschaften:

| η rel o,5 % mKresol | η Schm. 270°C/122,6N Pa s | Endgruppen NH₂/COOH µ Aeq/g | H₂O % | DSC onset/TG °C | Brech. index nD²⁰ |
|---|---|---|---|---|---|
| 1,45 | 1534 | 23/110 | 0.021 | 152/156 | 1,5867 |

Prüfstäbe besassen nach DIN 53 453 und DIN 53 455 eine Schlagzähigkeit OB (ohne Bruch), Kerbschlagzähigkeit 1,87 kJ/m², Zug-E-Modul 3620 N/mm², Reissfestigkeit 75 N/mm² und Reiss-dehnung 40 %.

### Beispiel 2

Aehnlich wie in Beispiel 1 wurde ein amorphes Copolyamid aus 35 Mol-% Hexamethylendiamin (HMD), 15 Mol-% m-Xylilendiamin (MXDA), 34 Mol-% Isophthalsäure (IPA) und 16 Mol-% Terephthalsäure (TPA) hergestellt mit den folgenden Eigenschaften:

| η rel o,5 % mKresol | η Schm. 270°C/122,6N Pa s | Endgruppen NH₂/COOH µ Aeq/g | H₂O % | DSC onset/TG °C | Brech. index nD²⁰ |
|---|---|---|---|---|---|
| 1,504 | 3232 | 33/123 | 0,005 | 134/138 | 1,6052 |

### Beispiel 3

Wie in Beispiel 1 wurde ein Copolyamid hergestellt mit folgender Zusammensetzung: 35 Mol-% HMD, 7,5 Mol-% 3,3'-Dimethyl-4,4-diaminodicyclohexyl-methan, 7,5 Mol-% m-Xylilendiamin, 45 Mol-% Isophthalsäure und 5 Mol-% Terephthalsäure. Einige physikalische Eigenschaften lauten wie folgt:

| η rel o,5 % mKresol | η Schm 270°C/122,6N Pa s | Endgruppen NH₂/COOH µ Aeq/g | H₂O % | DSC onset/TG °C | Brech. index nD²⁰ |
|---|---|---|---|---|---|
| 1,434 | 1300 | 35/175 | 0,002 | 154/159 | 1,5968 |

### Beispiel 4

Ein weiteres vergleichbar hergestelltes amorphes Copolyamid besass die Zusammensetzung: 35 Mol-% HMD, 15-Mol% m-Xylilendiamin, 50 Mol-% Isophthalsäure.

An physikalischen Eigenschaften sind gemessen worden:

| η rel o,5 % mKresol | η Schm 270°C/122,6N Pa s °C | Endgruppen NH₂/COOH µ Aeq/g | H₂O % | DSC onset/TG °C | Brech. index nD²⁰ |
|---|---|---|---|---|---|
| 1,486 | 1708 | 36/123 | 0,022 | 133/138 | 1,6058 |

Von den 4 Copolyamiden und zum Vergleich von einem amorphen Nylon 6.I wie in US-PS 4,937,130 beschrieben, sind auf einem Folienextruder 50 µ dicke Folien hergestellt worden und mit Hilfe eines Gasdurchlässigkeitsprüfgerätes gemäss Norm DIN 53 380 (ISO 2556) die folgenden Sauerstoff-Permeationswerte (trocken (tr) und konditioniert (ko)), sowie die CO₂- und Feuchtigkeits-Permeationen gemessen worden:

| Zusammensetzung in Mol-% | 1 | 2 | 3 | 4 | 6.I/6.T |
|---|---|---|---|---|---|
| HMD | 40 | 35 | 35 | 35 | 50 |
| Laromin | 10 | -- | 7,5 | -- | -- |
| MXDA | -- | 15 | 7,5 | 15 | -- |
| IPA | 40 | 34 | 45 | 50 | 70 |
| TPA | 10 | 16 | 5 | -- | 30 |
| T_{G} | 156 | 138 | 159 | 138 | 125 |
| n_{D}²⁰ | 1.5867 | 1.6052 | 1.5968 | 1.6058 | 1.6043 |
| O₂ trocken | 42 | 22 | 30 | 20 | 30 |
| O₂ kondit. | 19 | 7 | 14 | 6 | 8 |
| CO₂ trocken | 170 | 60 | 112 | 47 | 70 |
| H₂O | 7 | 5,5 | 6 | 4 | 7 |

Folienstücke, hergestellt durch Extrusion der Copolyamide aus den Beispielen 1 bis 4 bei Massetemperaturen von 280°C auf einem Reifenhäuser Flachfolienextruder wurden 3 Stunden in 70 und 80°C heisses Wasser gegeben und blieben biegsam und transparent; eine Folie aus Nylon 6.I/6.T hingegen wurde nach 20 min. trüb und spröde.

## Patentansprüche

1. Sperrschicht aus Copolyamid, für Mehrweg-Mehrschicht-Verpackungen, dadurch gekennzeichnet, dass die Sperrschicht heisswasserbeständig-transparent ist und das Copolyamid ein teilaromatisches, amorphes Copolyamid ist, das aus folgenden Komponenten besteht:
(a) 50 Mol-Teile unsubstituierte oder substituierte aromatische Dicarbonsäuren, welche von 0 bis zu 60 Gew.-% durch mindestens eine weitere Dicarbonsäure, ausgewählt aus der Gruppe der
- cycloaliphatischen Dicarbonsäuren mit 8 bis 24 C-Atomen,
- araliphatischen Dicarbonsäuren mit 8 bis 18 C-Atomen
ersetzt sind,
(b) 50 Mol-Teile Hexamethylendiamin, welches bis zu 60 Gew.-% durch mindestens ein weiteres Diamin, ausgewählt aus der Gruppe der
- unsubstituierten oder substituierten aliphatischen Diamine mit 4 bis 20 C-Atomen,
- substituierten cycloaliphatischen Diamine mit 6 bis 24 C-Atomen,
- araliphatischen Diamine mit 8 bis 18 C-Atomen,
ersetzt ist,
wobei die Säurengruppen und Aminogruppen im wesentlichen in äquimolaren Anteilen vorliegen.

2. Sperrschicht nach Anspruch 1, dadurch gekennzeichnet, dass die unsubstituierten oder substituierten aromatischen Dicarbonsäuren (a) durch 2 bis 50 Gew.-% mindestens einer weiteren Dicarbonsäure, ausgewählt aus der Gruppe
- cycloaliphatische Dicarbonsäuren mit 8 bis 24 C-Atomen,
- araliphatische Dicarbonsäure mit 8 bis 18 C-Atomen,
ersetzt sind.

3. Sperrschicht nach Anspruch 1, dadurch gekennzeichnet, dass Hexamethylendiamin (b) zu 5 bis 50 Gew.-% durch mindestens ein weiteres Diamin, ausgewählt aus der Gruppe der
- unsubstituierten oder substituierten aliphatischen Diamine mit 4 bis 20 C-Atomen,
- substituierten cycloaliphatischen Diamine mit 6 bis 24 C-Atomen,
- araliphatischen Diamine mit 8 bis 18 C-Atomen,
ersetzt ist.

4. Sperrschicht nach Anspruch 1 und 2, dadurch gekennzeichnet, dass die aromatische Dicarbonsäure ausgewählt ist aus der Gruppe: Terephthalsäure, Isophthalsäure und tert.-Butylisophthalsäure.

5. Sperrschicht nach Anspruch 1 und 3, dadurch gekennzeichnet, dass das Diamin ausgewählt ist aus der Gruppe: 2,2',4- und 2,4,4'-Trimethylhexamethylendiamin, 3,3'-Dimethyl-4,4'-diaminodicyclohexyl-methan, Bis-(4-amino-3,5-diethylcyclohexyl)-methan, 3-Aminomethyl-3,5,5-trimethyl-l-cyclohexyl-amin, 1,3-Diaminomethylcyclohexan, m-Xylilendiamin und p-Xylilendiamin.

6. Sperrschicht nach Anspruch 1, dadurch gekennzeichent, dass das Copolyamid aus Einheiten von Terephthalsäure, Isophthalsäure sowie Hexamethylendiamin und 3,3'-Dimethyl-4,4'-diaminodicyclohexyl-methan aufgebaut ist.

7. Sperrschicht nach Anspruch 1, dadurch gekennzeichnet, dass das Copolyamid aus Einheiten von Terephthalsäure, Isophthalsäure sowie Hexamethylendiamin und m-Xylilendiamin aufgebaut ist.

8. Sperrschicht nach einem der vorangehenden Ansprüche, dadurch gekennzeichnet, dass die Glasumwandlungstemperatur (TG) mindestens 135°C ist und im konditionierten Zustand von mindestens 75°C hat.

9. Sperrschicht nach einem der vorangehenden Ansprüche, dadurch gekennzeichnet, dass die Glasumwandlungstemperatur (TG) mindestens 140°C ist.

10. Verwendung einer Sperrschicht gemäss einem der vorangehenden Ansprüche zur Herstellung von Mehrweg-Mehrschicht-Verpackungskörpern.

11. Mehrweg-Mehrschicht-Verpackungskörper, dadurch gekennzeichnet, dass er mindestens eine Sperrschicht gemäss einem der Ansprüche 1 bis 9 enthält.

12. Mehrweg-Mehrschicht-Verpackungskörper gemäss Anspruch 11, dadurch gekennzeichnet, dass er zusätzlich zur Sperrschicht aus weiteren Polymerschichten besteht.

13. Mehrweg-Mehrschicht-Verpackungskörper gemäss Anspruch 12, dadurch gekennzeichnet, dass die Polymerschichten ausgewählt sind aus der Gruppe, die aus Polyvinylalkohol, Polyacrylat, Polyolefin, Polyester, Copolyester, Polyamid, Copolyamid, Polycarbonat, deren Blends oder deren Mischungen besteht.

14. Mehrweg-Mehrschicht-Verpackungskörper mit mindestens einer Sperrschicht gemäss einem der Ansprüche 1 bis 9, dadurch gekennzeichnet, dass er durch Extrusion, Koextrusion, Blasformen, wahlweise kombiniert mit Tiefziehen, hergestellt ist.
